# EUROPEAN PATENT APPLICATION

(11) **EP 4 672 566 A1**
(43) Date of publication of application: **31.12.2025**
(21) Application number: 24185465.2
(22) Date of filing: 28.06.2024
(51) Int. Cl.: H02K 5/02, H02K 5/22, H02K 5/08, B60K 11/02, B60K 17/06, H02K 9/19, H02K 7/116

(54) **CASING FOR AN ELECTRIC DRIVE, ELECTRIC DRIVE AND ELECTRIC DRIVE SYSTEM CASING**

(71) Applicant: Röchling Automotive SE, 68165 Mannheim (DE)
(72) Inventor: Montaruli, Mariagrazia, 70037 Ruvo di Puglia (IT)
(74) Representative: Ullrich & Naumann PartG mbB

(57) **Abstract**

The invention relates to a casing for an electric drive, comprising a first casing section for receiving an electric drive motor and a second casing section for receiving a thermal management unit, wherein the first and the second casing sections are formed in one piece, wherein the first and the second casing section are made from plastic, preferably a thermoplastic, wherein the second casing section comprises a holding unit with at least one seat for a thermal management medium delivery system, preferably a cooling fluid pump.

## Description

The invention relates to a casing for an electric drive.

The invention further relates to an electric drive.

Moreover, the invention relates to an electric drive system casing.

Furthermore, the invention relates to an electric drive system.

Although applicable to any kind of casings for an electric drive, the present invention will be described with regard to casings for an electric drive of a battery electric vehicle, 'BEV'.

Casings for an electric drive are known, for example from DE 10 2019 111 729 A1, which discloses a casing of an electric drive of a BEV. The casing comprises a stator of the electric drive and several cooling channels for circulating a cooling fluid. The cooling channels are integrated into the casing and can be connected to an external thermal management system, which is secured adjacent to the casing.

One of the disadvantages, however, is that the casing and the thermal management system require a lot of space. Another disadvantage is that the casing and the thermal management system are expensive.

One of the objectives of the present invention is therefore to provide a casing for an electric drive, an electric drive, an electric drive system casing and an electric drive system, which have a compact design and which are easy and cheap to manufacture.

A further objective of the present invention is to provide an alternative casing for an electric drive, an alternative electric drive, an alternative electric drive system casing and an alternative electric drive system.

In an embodiment, the present invention may solve at least one of the objectives by a casing for an electric drive, comprising a first casing section for receiving an electric drive motor and a second casing section for receiving a thermal management unit, wherein the first and the second casing sections are formed in one piece, wherein the first and the second casing section are made from plastic, preferably a thermoplastic, wherein the second casing section comprises a holding unit with at least one seat for a thermal management medium delivery system, preferably a cooling fluid pump.

In an embodiment, the present invention may solve at least one of the objectives by an electric drive comprising a casing according to any of claims 1 to 11 as well as an electric drive motor and/or a thermal management unit, wherein the electric drive motor is positioned in the first casing section and/or wherein the thermal management unit is positioned in the second casing section.

In an embodiment, the present invention may solve at least one of the objectives by an electric drive system casing comprising a casing according to any of claims 1 to 11 as well as a transmission casing and/or an electronics casing.

In an embodiment, the present invention may solve at least one of the objectives by an electric drive system comprising an electric drive system casing according to claim 13, an electric drive motor positioned in the first casing section, a thermal management unit positioned in the second casing section as well as a transmission positioned in the transmission casing and/or electronics positioned in the electronics casing.

One of the advantages may be that a compact casing for an electric drive can be realised. Another advantage may be that the casing has a high level of integration of different components. Moreover, an advantage may be that the production costs can be reduced.

Electric drive in the sense of the invention means or comprises in particular an automotive electric motor, an automotive electric machine, an automotive electric traction machine and/or an automotive power unit.

Further features, advantages and preferred embodiments are disclosed or may become apparent in the following.

According to a preferred embodiment of the invention, the holding unit comprises a seat for one or more valves and/or one or more heat exchangers. Especially, the holding unit can comprise seats for all valves and the heat exchanger of the thermal management unit. An advantage of this configuration is that a high level of integration of the valves and the heat exchanger within the casing can be achieved.

According to a further preferred embodiment of the invention, the holding unit comprises at least one seat for a thermal management medium reservoir, preferably a cooling fluid reservoir. An advantage of this configuration is that the reservoir can be directly attached to the casing, thereby reducing space requirements.

According to a further preferred embodiment of the invention, the first casing section comprises a first passage, preferably multiple first passages, for delivering of a thermal management medium. Preferably, the passages can be cooling passages for cooling the electric drive motor. The first passage can be wound helically inside the first casing section. Additionally and/or alternatively, the first passage can run along an axial direction of the first casing section, specifically back and forth along the axial direction. An advantage of this feature is that the electric drive motor can be cooled very efficiently. Another advantage of this feature is that the cooling passage can be provided easily and cheaply.

According to a further preferred embodiment of the invention, the second casing section comprises a second passage, preferably multiple second passages, for delivering of a thermal management medium. The second passage can be placed within the second casing section such that the second passage or passages fluidly connect to the first passage or passages of the first casing section. Preferably, the second casing passage can fluidly connect components of the thermal management unit, such as the cooling fluid pump, the valves and/or the cooling fluid reservoir with the first passage. One of the advantages of this configuration is that a fluid connection between the thermal management unit and the electric drive cooling passages can be provided in a cost-effective way.

According to a further preferred embodiment of the invention, the first and/or second passages are adapted to receive a thermal management medium pipe. This means, that a thermal management medium pipe can be affixed within the first and/or second passage. An advantage of this feature is that a material for the casing for the electric drive can be chosen regardless of its compatibility with the thermal management medium, specifically the cooling fluid, because the cooling fluid runs within the medium pipe and is not in direct contact with the casing.

According to a further preferred embodiment of the invention, the first and/or second passages are placed symmetrically to an axis of the electric drive casing. This has for example the advantage that the electric drive motor can be cooled in an efficient way.

According to a further preferred embodiment of the invention, the casing is made by injection molding. Specifically, the casing and the seats for the valves, the cooling fluid pump, the thermal management medium reservoir, the first passage and/or the second passage can be made by one injection molding step. This has the advantage, that all the seats and the casing itself can be produced in a quick and simple way. Alternatively, the parts can be injected molded separately and then assembled by plastic welding.

According to a further preferred embodiment of the invention, the casing is made from a thermoplastic with a heat transfer coefficient greater than 0.1 W/mK, preferably greater than 0.2 W/mK, specifically greater than 0.3 W/mK. One of the advantages of this feature is that the casing itself can transfer from the electric drive motor to a surrounding area, thereby increasing the cooling of the electric drive motor. Thermal conductivity of the casing can be further increased to enhance the cooling performance of the electric drive, e.g. an electric drive motor, by using thermally conductive materials in particular having a thermal conductivity >1 W/mK and/or by overmolding metal inserts.

According to a further preferred embodiment of the invention, the thermal management medium is a cooling fluid, preferably an oil. One of the advantages of this feature is that the electric drive can be efficiently cooled. Another advantage is that an oil pump can be used to circulate the fluid, which reduces the costs of the thermal management unit.

According to a further preferred embodiment of the invention, said second casing section is placed at an axially distal end of the first casing section. An advantage of this configuration is that the fluid passages can be run axially along the first and second casing section with fewer bends, thereby reducing the pressure loss along the fluid passages. Another advantage is that the components for the thermal management unit can be easily mounted in the second casing section.

According to a further preferred embodiment of the invention, the electric drive system casing as well as the transmission casing and/or the electronics casing are formed as one piece, preferably by injection molding. This has the advantage that a higher level of integration of an electric drive can be achieved, as multiple components of the electric drive can be placed within a single piece of casing. Moreover, this reduces the required space and decreases costs.

There are several ways how to design and further develop the teaching of the present invention in an advantageous way. To this end, it is to be referred to the patent claims subordinate to the independent patent claims on the one hand and to the following explanation of preferred examples of embodiments of the invention, illustrated by the drawings on the other hand. In connection with the explanation of the preferred embodiments of the invention by the aid of the drawings, generally preferred embodiments and further developments of the teaching will be explained.

### In the drawings

- Fig. 1: shows a casing for an electric drive according to an embodiment of the invention;
- Fig. 2: shows a front view cross section of the casing for an electric drive of Figure 1;
- Fig. 3: shows an electric drive according to an embodiment of the invention;
- Fig. 4: shows an electric drive system casing according to an embodiment of the invention;
- Fig. 5: shows an electric drive system according to an embodiment of the invention.

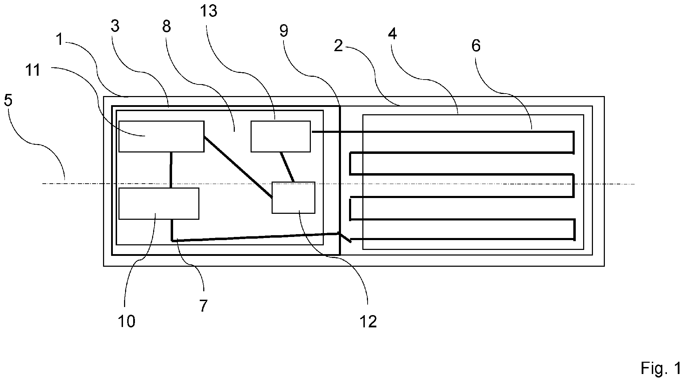

Figure 1 shows a casing for an electric drive according to an embodiment of the invention.

The casing 1 for an electric drive (not shown) is made from a thermoplastic and comprises a first casing section 2 and a second casing section 3. The first casing section 2 comprises a seat 4 for an electric drive, which can be an electric motor comprising an inner rotor and an outer stator. Within the second casing section 3 is a holding unit 8 provided for a thermal management unit (not shown). The first and/or second casing section 2, 3 can be of cylindrical shape and/or mostly symmetrical along an axial axis 5. Specifically, the second casing section 3 can be positioned at a distal end 9 of the first casing section 2 in the direction of the axial axis 5. Moreover, the first and second casting section 2, 3 can be one piece, i.e. they can be moulded in one piece during an injection process.

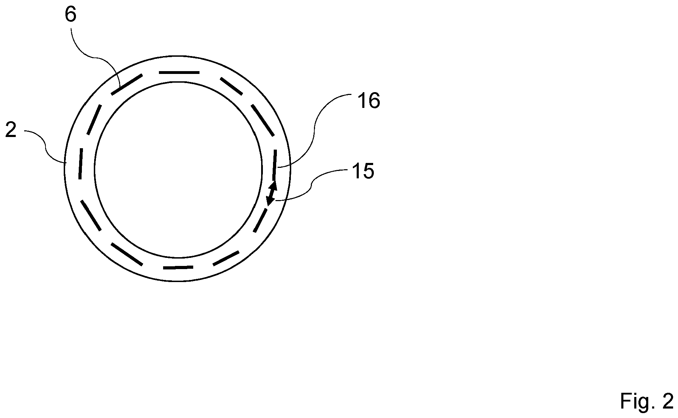

The first casing section 2 comprises a first fluid passage 6, which is wound back and forth along the axial axis 5. Specifically, the first fluid passage 6 is positioned in the body of, in particular within the outer circumference of, the first casing section 2, which can be seen in Figure 2. A second fluid passage 7 is positioned within the second casing section 3 und is fluidly connected to the first fluid passage 6. The second fluid passage 7 fluidly connects seats of different components of the thermal management unit. Specifically, the second casing section 3, especially the holding unit 8 for the thermal management unit of the second casing section 3, comprises a seat for a cooling pump 10, a seat for a valve 11 or multiple valves, a seat for a heat exchanger 12 and a seat for a cooling fluid reservoir 13. Therefore, the combination of the first and second fluid passages 6, 7 allow for fluid to be circulated through different components of the thermal management unit and around the electric drive in order to cool the electric drive.

The seats for the components of the thermal management unit 10, 11, 12, 13 are moulded directly into the second casing section 3, such that the corresponding components can be directly attached in the second casing section 3. As shown in Figure 1, the seats for the components of the thermal management unit 10, 11, 12, 13 are fluidly connected in series by the second fluid passage 7. However, any other connection type could also be envisioned. For example, the seats 10, 11, 12, 13 could be connected in parallel or some or all of the seats 10, 11, 12, 13 could be connected to multiple or all other seats 10, 11, 12, 13 in same or different order. The first and second fluid passages 6, 7 can be adapted to transfer a cooling fluid directly and/or they can be adapted to hold a pipe, which in turn transfers the cooling medium. The cooling fluid could either be a fluid, e.g. an oil, or a gas or a phase-change material.

Figure 2 shows a front view cross section of the casing for an electric drive of Figure 1.

The first fluid passage 6 is circumferentially placed along the first casing section 2. The windings of the first fluid passage 6 are evenly spaced apart, such that a distance 15 between two fluid passage lines 16 is roughly equal between all neighbouring fluid passage lines 16.

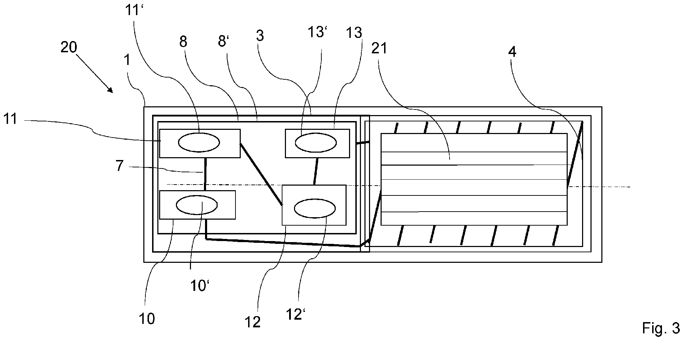

Figure 3 shows an electric drive according to an embodiment of the invention.

The electric drive 20 comprises a casing for an electric drive 1, specifically a casing for an electric drive 1 according to Figure 1. The electric drive 20 comprises a driving unit 21, which is positioned within the seat for an electric drive 4 as well as a thermal management unit 8'. The thermal management unit 8' is positioned within the seat for the thermal management unit 8 and comprises different components, specifically a fluid pump 10', valves 11', a heat exchanger 12' and a cooling fluid reservoir 13', which are placed in their respective seats 10, 11, 12, 13 within the second casing section 3.

The components 10', 11', 12', 13' of the thermal management unit 8' are fluidly connected by the second fluid passage 7, such that a cooling fluid can be transported by fluid pump 10', controlled by valves 11', cooled by heat exchanger 12' and/or stored in the fluid container 13'.

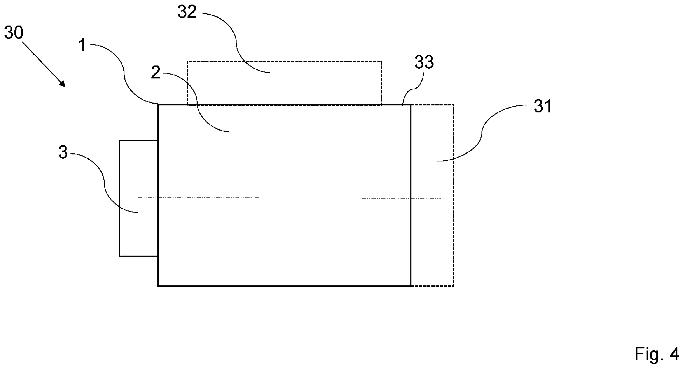

Figure 4 shows an electric drive system casing according to an embodiment of the invention.

The electric drive system casing 30 comprises a casing for an electric drive 1, specifically a casing for electric drive 1 according to Figure 1. Additionally, a transmission casing 31 and an electronics casing 32 are provided. The transmission casing 31 and the electronics casing 32 are moulded in one piece to the casing for an electric drive 1, i.e. the casing for an electric drive 1, the transmission casing 31 and the electronic casing 32 are all moulded in one piece. Alternatively, the parts are formed separately, for example by injection moulding, and afterwards the parts are joined into one piece, for example welded together. Specifically, the transmission casing 31 is attached to a distal end of the first casing section 2, opposite to the second casing section 3 and the electronics casing 32 is attached to an outer shell 33 of the first casing section 2.

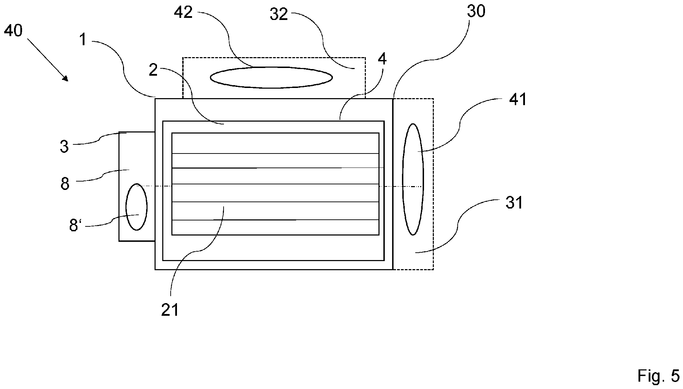

Figure 5 shows an electric drive system according to an embodiment of the invention.

The electric drive system 40 comprises an electric drive system casing 30, specifically an electric drive system casing 30 of Figure 4. Within the first casing section 2, a drive unit 21 in the form of an electric motor is positioned. Moreover, a thermal management unit 8' is positioned in the seat for the thermal management unit 8, a transmission 41 is positioned in the transmission casing 31, electronics 42 are positioned in the electronics casing 32 and a drive unit in the form of an electric motor 21 is positioned in the seat for an electric drive 4.

At least one embodiment may provide at least one of the following features and/or at least one of the following advantages:
- High integration of components of the thermal management unit.
- High integration of components of the drive system.
- Cheap manufacturing.
- Little space requirement.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Casing
- 2: First casing section
- 3: Second casing section
- 4: Seat for an electric drive
- 5: Axial axis
- 6: First fluid passage
- 7: Second fluid passage
- 8: Holding unit for a thermal management unit
- 8': Thermal management unit
- 9: Axially distal end
- 10: Seat for a cooling pump
- 10': Cooling Pump
- 11: Seat for a valve
- 11': Valve
- 12: Seat for heat exchanger
- 12': Heat Exchanger
- 13: Seat for a cooling fluid reservoir
- 13': Cooling fluid reservoir
- 15: Distance
- 16: Fluid passage lines
- 20: Electric drive
- 21: Driving unit
- 30: Electric drive system casing
- 31: Transmission casing
- 32: Electronics casing
- 33: Outer shell
- 40: Electric drive system
- 41: Transmission
- 42: Electronics

## Claims

1. Casing (1) for an electric drive, comprising
a first casing section (2) for receiving an electric drive motor and
a second casing section (3) for receiving a thermal management unit, wherein
the first and the second casing sections (2, 3) are formed in one piece, wherein
the first and the second casing section (3) are made from plastic, preferably a thermoplastic, **characterized in that**
the second casing section (3) comprises a holding unit (8) with at least one seat for a thermal management medium delivery system (10), preferably a cooling fluid pump (10').

2. Casing (1) according to claim 1, **characterized in that** the holding unit (8) comprises a seat for one or more valves (11) and/or one or more heat exchangers (12).

3. Casing (1) according to claim 1 or 2, **characterized in that** the holding unit (8) comprises at least one seat for a thermal management medium reservoir (13), preferably a cooling fluid reservoir (13').

4. Casing (1) according to any of claims 1 to 3, **characterized in that** the first casing section (2) comprises a first passage (6), preferably multiple first passages, for delivering of a thermal management medium.

5. Casing (1) according to any of claims 1 to 4, **characterized in that** the second casing section (3) comprises a second passage (7), preferably multiple second passages, for delivering of a thermal management medium.

6. Casing (1) according to claim 3 or 4, **characterized in that** the first and/or second passages (6, 7) are adapted to receive a thermal management medium pipe.

7. Casing (1) according to claim 5 or 6, **characterized in that** the first and/or the second passages (7) are placed symmetrically to an axis (5) of the electric drive casing (1).

8. Casing (1) according to any of claims 1 to 7, **characterized in that** the casing (1) is made by injection molding.

9. Casing (1) according to any of claims 1 to 8, **characterized in that** the casing (1) is made from a thermoplastic with a heat transfer coefficient greater than 0.1 W/mK, preferably greater than 0.2 W/mK, specifically greater than 0.3 W/mK.

10. Casing (1) according to any of claims 1 to 9, **characterized in that** the thermal management medium is a cooling fluid, preferably an oil.

11. Casing (1) according to any of claims 1 to 10, **characterized in that** said second casing section (3) is placed at an axially distal (9) end of the first casing section (2).

12. Electric drive (20) comprising a casing (1) according to any of claims 1 to 11 as well as an electric drive motor (21) and/or a thermal management unit (8'), wherein the electric drive motor (21) is positioned in the first casing section (2) and/or wherein the thermal management unit (8') is positioned in the second casing section (3).

13. Electric drive system casing (30) comprising a casing (1) according to any of claims 1 to 11 as well as a transmission casing (31) and/or an electronics casing (32).

14. Electric drive system casing (30) according to claim 13, **characterized in that** the electric drive system casing (30) as well as the transmission casing (31) and/or the electronics casing (32) are formed as one piece, preferably by injection molding.

15. Electric drive system (40) comprising an electric drive system casing (30) according to claim 13 , an electric drive motor (21) positioned in the first casing section (2), a thermal management unit (8') positioned in the second casing section (3) as well as a transmission (41) positioned in the transmission casing (31) and/or electronics (42) positioned in the electronics casing (32).
